Europäisches Patentamt

European Patent Office

Office européen des brevets

(11) Publication number: **0 294 347**
**A1**

(12) # EUROPEAN PATENT APPLICATION

(21) Application number: **88850101.2**

(51) Int. Cl.⁴: **F 03 B 1/00**

(22) Date of filing: **23.03.88**

(30) Priority: **23.03.87 YU 486/87**

(43) Date of publication of application:
**07.12.88 Bulletin 88/49**

(84) Designated Contracting States: **CH DE FR IT LI**

(71) Applicant: **Glad, Milan**
**Dimitrija Tucovica 24**
**YU-11000 Belgrad (YU)**

(72) Inventor: **Glad, Milan**
**Dimitrija Tucovica 24**
**YU-11000 Belgrad (YU)**

(74) Representative: **Sedvall, Bengt Gustaf**
**B. Sedvall Patentbyra Box 7182**
**S-103 88 Stockholm (SE)**

The title of the invention has been amended (Guidelines for Examination in the EPO, A-III, 7.3).

(54) **Hydro turbine.**

(57) There is disclosed a hydroturbine which exploits the potential energy of a water column of high pressure - changing it into the speed of the stream action of the flow over the rotor blades and by their rotating moment increases the speed of the jet by the press-back force pressing out the water flow of the turbine system.

The stator body (1) is a cylindrical cave (27) of oval shape in which is placed the shaft with the rotor on which is a comparting disc with, both sides equipped with blades. The blades are both on upper and lower side halfaxially positioned to the jet pipes (26). On the other side of the stator body, there is a half-axially positioned Bernulli pipe (19).

On the front side is the introductor (22), which closes by means of a hydro-closer (24) which continues by the introducing funnel (29).

The so disposed construction functions as follows: upon opening the hydro-closer, the potential energy of the water column changes over the introducing funnel and the jet-pipes (26) into high speed impact on the rotor's blades, turns them with high speed which by their turning is increased and presses out the water flow over the Bernulli pipe half-axially out of the system, achieving the constant work of the turbine. Lowering the hydro-closer, the fluid input steps, and therefore the turbine's work.

FIG. 1

**Description**

## THE HYDRO TURBINE IN A CLOSED SYSTEM HYDRO ELECTRIC POWER PLANT

Technical Field To Which The Invention Belongs

The subject of the invention falls in the field of working engines with stream action with spade carrying rotor actioned by high speed fluid (water) jets.

According to the international patent classification, the subject of the invention is classified and signed with the classification symbols F 03, F 01, F 04, 3/12, 1/04.

Technical Problem

The technical problem that is solved with this invention report consists in the following: How to solve the construction problem of a working engine (turbine) with stream action of fluid jets on the rotor's spades. How to solve the problem ˙ of positioning and modeling the rotor's spades. How to constructionally model the stators aperture achieving the maximal grade of exploatation of the generator's power. How to constructionally solve the pressing-out at the working fluid from the closed system. How to constructionally position the elements for the inbringing of the working fluid, achieving that the potential energy of the fluid changes to kinetical as to achieve the maximal degree of energy exploatation and the security of functioning for a longer period of time.

Actual State of Technic

Until now, there are known constructions of working engine with stream action, the working of which consist in the expansion of the working means - high pressure fluid - with the mutation of the potential energy to kinetical, which is achieved with the high speed impact of the working means on the rotor's spades, changing therefore its direction and turning the jet which makes pressure on the rotor's spades causing their rotation. Between the known such constructions, there is the Pelton's turbine that consists of housing, rotor, jet-pipe and inbringing tube. A turbin constructed in this way, uses the mid and high falls of water, that is brought by tubes to the jet pipe which is tangentially directed on the spades of the rotor turning the jet for 180 degrees producing the action on the rotor. The degree of work is 0,9. Beside the good features of this construction, there is a lot of imperfections that can be caught sight of in the following.

The pressure between the static parts and the spades of the rotor does not change, therefore higher speeds of axle rotation cannot be achieved. The maximal speed is 1000 rpm. The work depends of the water fall, therefore it is limited. The fluid goes out of the turbine by halfaxle which makes the turbine unusable in a closed system because the action power of the fluid decreases rapidly, once out of the rotor. This imperfection makes impossible the use of the natural accumulations of water, such as sea or lakes, where an enormous potential energy of the water fluid is accumulated.

Inbetween the other known constructions of turbines, there are the Frances'es and Caplan's which distinct themselves by using the fluid work both on stator's and rotor's spades. The reaction power produced by the constructionally unequal section of the channels between the rotor's spades, the force on the spades is produced by the turning of the jet and its reaction power (by means of the backwards pressure) which creates the difference of pressure in front of and behind the spades producing action on the rotor in direction of its axle. Usually, the Caplan's turbine has propeller shaped spades. Aside the features of the Caplan's and Frances'es turbine, such as their usability on little falls, both depend on the shape of the rotor spades, which directly affects the maximal rotation speed which is 600 rpm.

All the enumerated constructional solutions have the following elementary imperfections, which are:

1. Not suitable for an exploatation of the potential energy of sea, lakes and water flows without flood-gates with high, mid or low water fall with huge quantity of water.

2. Because of the energy spread, the degree of exploatation is just 0,9.

3. Because of the decreasing of the potential energy of the working fluid, the speed of rotation of the rotor axle is limitated.

4. Not suitable for use in closed systems by pressing out the fluid jet as by the scientific laws of physics.

Description Of The Technical Problem Solution

The technical problem which is defined in front, is solved after the invention by means of changing the potential energy of the water column into speed of the stream action of the jet on the rotor's spades, where the rotation moment of rotor's spades increases the flow speed, creating the press back for the water flow pressing out of the system by half axial movement of the water flow and therefore the constant work of the working engine (turbine). The invention will be described in details on page 1, picture 1, that shows the cross-section of the working engine (turbine) with all the elements of the system.

On picture 1 the shown invention consists of: the stator body (1) in which a cylindrical cave (27), oval sectioned in which is by the vertical axle positioned the axle-spindle (2) that passes through the rotor housing (3) on which is fixed by the axial axle the disc (4) on which are both on the upper and lower side positioned the spades (5) is positioned circularly the band (6). The housing of the rotor (3) is firmly fixed by the screws (14) (16) on the axle (2) and fixed by the heads (15) (17). On the upper and lower side the cylindric cave (27) is closed by the housing (8) in which are positioned the bearings (9) which on both sides lean against the semering (7) and which are by means of the heads (10) firmly connected by the screw (33) to the housing. On the upper side of the axle (2) is positioned the cog-wheel (11) firmly fixed to the axle (2) by means of the head (13). On the edge of the body (1) by the openings (20) on the side, and jet-pipes (26), by the introductor (22), sliding plate (23), hydro-closer (24) on which is the hollowed out semering (31) with the positioned funnel (30) for the diameter R. On the other side, by the opening (19) in which is positioned the Bernulli pipe (32) for the diameter R and R$^I$. The so positioned pieces are firmly fixed above the body (1) by the carrier (21).

With such positioned elements, the working engine (turbine) is constructionally capable of functioning.

The function of the in front enumerated construction elements is achieved by raising the hydro-closer (24) over the junctioning mechanism of the connection (25) by means of which will the potential energy of the water mass (pressure) passes through the introducer (22) for the diameter R$^I$, through the opening (29) and after through the jet-pipes (26) for the diameter R$^2$ and R$^3$ tangentially on the spades (5) turning them by the impact force of high speed, increasing that speed in the opening (27), so that by the press back force achieve high speed on the finding part of the rotor press out the water flow through the opening (19), halfaxially through the Bernulli pipe (32) out of the turbine's closed system in any case of the high-fall mountain rivers, where the press-out of the liquid fluid through the opening (19) and the Bernulli pipe (18) spreads axially.

Picture 2 shows the horisontal cross-section of the rotor's housing (3), disc (4) with shown disposition of the spades (5) which are positioned reciprocally for the angle D and their ends turned for the angle D$^I$. Such disposed spades on the upper and lower side of the disc (4) in the opening (27) secure the in front described functioning.

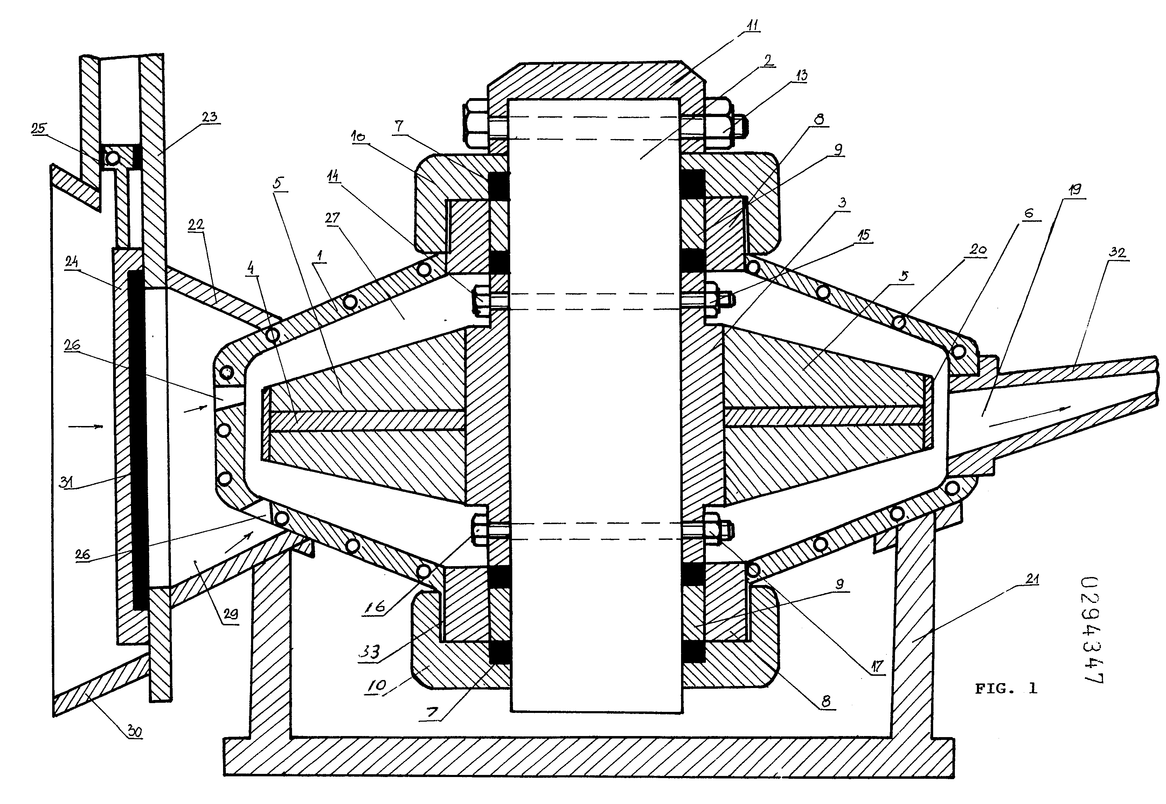

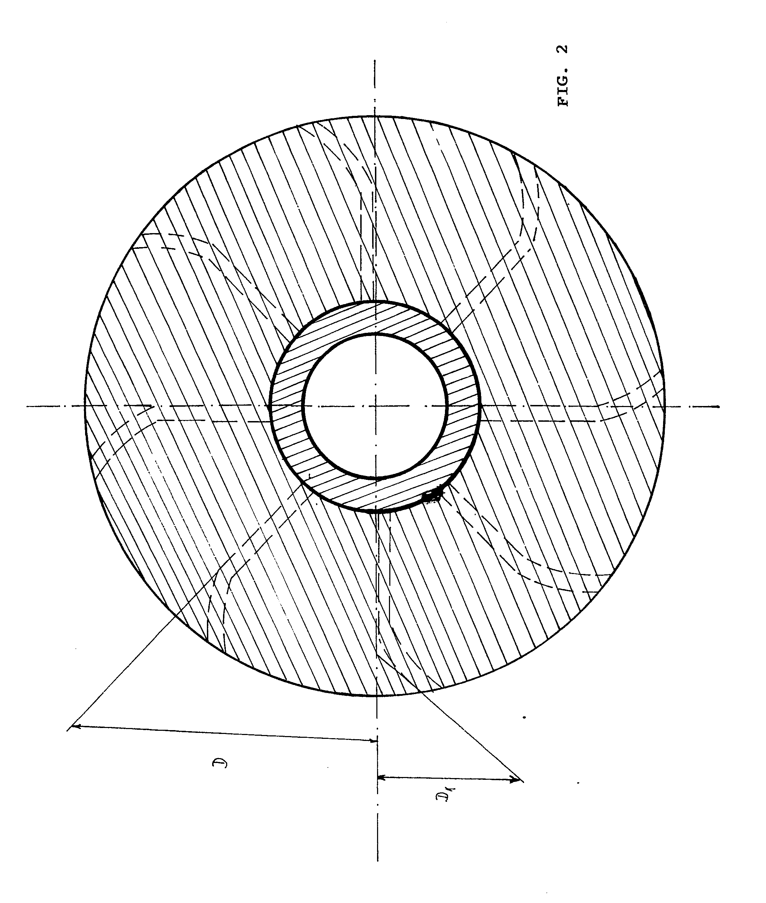

## Claims

1. Hydro turbine in a closed system of a hydro-electric power plant - working engine of stream action with spades carrying rotor and high speed fluid jets and consists of body (1) stator and axle (2) with housing (3), disc (), on which are on the both sides disposed the spades (5), the union of which makes with the axle (2) the rotor, signed by the positioning in the cylindric cave (27) of the body (1) - of the axle on which is on the upper side positioned the cog-wheel (11) by screw (12) firmly fixed to the axle (2) on which is fixed the head (13). The central opening (27) of the body (1) is closed by both the sides by the housing (8) on which are the bearings (20). On the side of the body (1) is by the positioned openings of the jet-pipes (26) for the diameter (R$^2$R$^3$) with firmly fixed introductor (22) with the body (1) on which firmly fixed the sliding plate (23) on which leans the hydrocloser (24) on which is hollowed out the semering (31) with positioned connection (25) firmly fixed by means of the hydrocloser (24) on the sliding plate (23) firmly fixed by the funnel (28) to the diameter (R) with opening (30). On the other side, the axially disposed Bernulli pipe (18), with opening (19), diameter (R,R$^I$) and the Bernulli pipe (32) positioned half-axially with opening of diameter (R,R$^I$). The body (1) is firmly fixed to the carrier (21). On the disc (4), housing (3), are disposed on both sides of the disc (4) the spades (5) for the angle (D) turned on the ends form an angle (D$^I$).

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | FR-A-1 193 735  (TECHNICA ETABLISSEMENT) <br> * Figure 8; page 3, right-hand column, line 52 - page 4, left-hand column, line 33 * <br> --- | 1 | F 03 B    1/00 |
| A | US-A-2 060 414  (FLADELAND) <br> * Page 1, left-hand column, line 44 - right-hand column, line 33 * <br> ----- | 1 | |

TECHNICAL FIELDS SEARCHED (Int. Cl.4)

F 03 B

The present search report has been drawn up for all claims

| Place of search | Date of completion of the search | Examiner |
|---|---|---|
| THE HAGUE | 27-09-1988 | DE WINTER P.E.F. |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons
 
& : member of the same patent family, corresponding
      document

EPO FORM 1503 03.82 (P0401)